# EUROPEAN PATENT APPLICATION

(11) **EP 4 674 689 A1**
(43) Date of publication of application: **07.01.2026**
(21) Application number: 23924482.5
(22) Date of filing: 01.03.2023
(51) Int. Cl.: B60Q 3/80

(54) **LIGHTING CONTROL DEVICE AND LIGHTING CONTROL METHOD**

(71) Applicant: Nissan Motor Co., Ltd., Kanagawa 221-0023 (JP)
(72) Inventor: MARUO, Shunsuke, Atsugi-shi, Kanagawa 243-0123 (JP)
(74) Representative: Osha BWB
(86) International application number: PCT/JP2023/007614
(87) International publication number: WO 2024/180730

(57) **Abstract**

A lighting control device that controls a plurality of lights disposed in a vehicle interior includes an image obtaining unit 11 that obtains a captured image from a camera 1 that captures an image of the vehicle interior, an identification unit 12 that identifies an action of at least one occupant among a plurality of occupants and an attribute of another occupant different from the one occupant among the plurality of occupants and/or a state of the other occupant based on the captured image, a state information obtaining unit 13 that obtains vehicle state information indicative of a vehicle state of a vehicle, and a lighting control unit 14 that selects a target light as a lighting target of the light based on identification results by the identification unit 12 and the vehicle state, and turns on the selected target light.

## Description

### Technical Field

The present invention relates to a lighting control device and a lighting control method.

### Background Art

There has been conventionally known an interior light control device that controls the turning on of interior lights disposed in a vehicle (e.g., Patent Document 1). The interior light control device described in Patent Document 1 receives an input of a captured image including at least a part of a vehicle interior, detects an occupant in the vehicle interior from the received captured image, determines whether the occupant is performing a specific action or not, and turns on an interior light when a determination that the occupant is performing the specific action is made.

### Prior Art Document

### Patent Document

Patent Document 1: JP-A-2016-107864

### Summary of Invention

### Problems to Be Solved by Invention

The interior light control device described in Patent Document 1 turns on the interior light when a determination that a certain occupant is performing a specific action is made irrespective of an action or an attribute of another occupant other than the occupant who has performed the specific action, thereby posing a problem of impairing the comfort of the other occupant due to the turning on of the interior light.

An object to be achieved by the present invention is to provide a lighting control device and a lighting control method that control lighting while maintaining the comfort of occupants in a vehicle interior.

### Means for Solving Problems

The present invention solves the above-described problem by obtaining a captured image from a camera, identifying an action of at least one occupant among a plurality of occupants and an attribute of another occupant and/or a state of the other occupant based on the captured image, obtaining vehicle state information, selecting a target light as a lighting target of lighting based on identification results and a vehicle state, and turning on the selected target light.

### Effects of Invention

The present invention allows controlling lighting while maintaining the comfort of occupants in a vehicle interior.

### Brief Description of Drawings

FIG. 1 is a block diagram illustrating an exemplary lighting control system according to an embodiment.
FIG. 2A is a table showing the correlations between a target occupant, other occupants (the first row, the second row), and a vehicle state and a target light.
FIG. 2B is a table showing the correlations between a target occupant, other occupants (the first row, the second row), and a vehicle state and a target light.
FIG. 3 is a flowchart showing a controller control process in FIG. 1.
FIG. 4 is a flowchart showing a subflow of Step S40 shown in FIG. 3.
FIG. 5 is a flowchart showing a subflow of Step S90 shown in FIG. 3.

### Modes for Carrying out the Invention

### First Embodiment

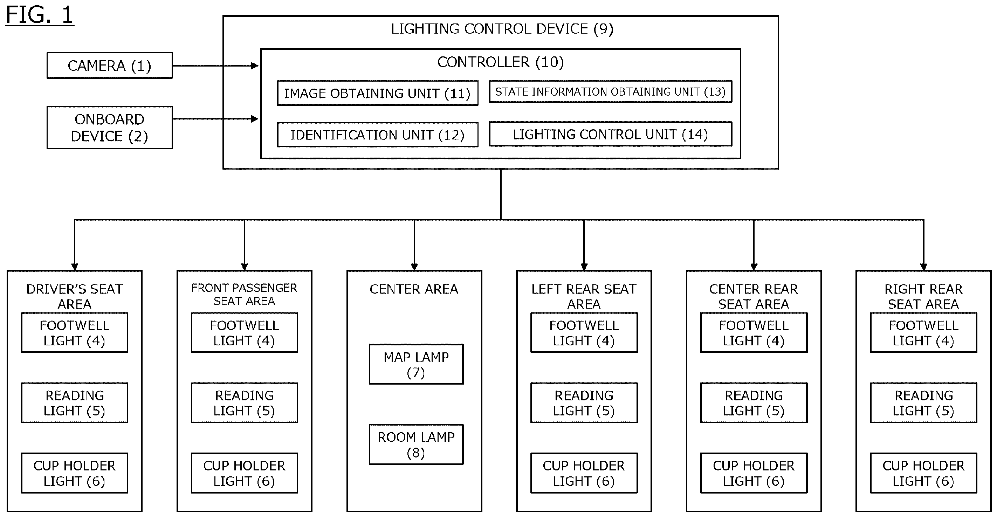

The following describes embodiments of the present invention on the basis of the drawings. FIG. 1 is a block diagram illustrating an exemplary lighting control system according to an embodiment. The lighting control system according to the embodiment is a system disposed in a vehicle, and identifies an action of at least one occupant among a plurality of occupants and an attribute of another occupant different from the occupant whose action has been identified and/or a state of the other occupant on the basis of a captured image by an onboard camera. On the basis of identification results and a vehicle state, the lighting control system selects a target light as a lighting target, and turns on the selected target light.

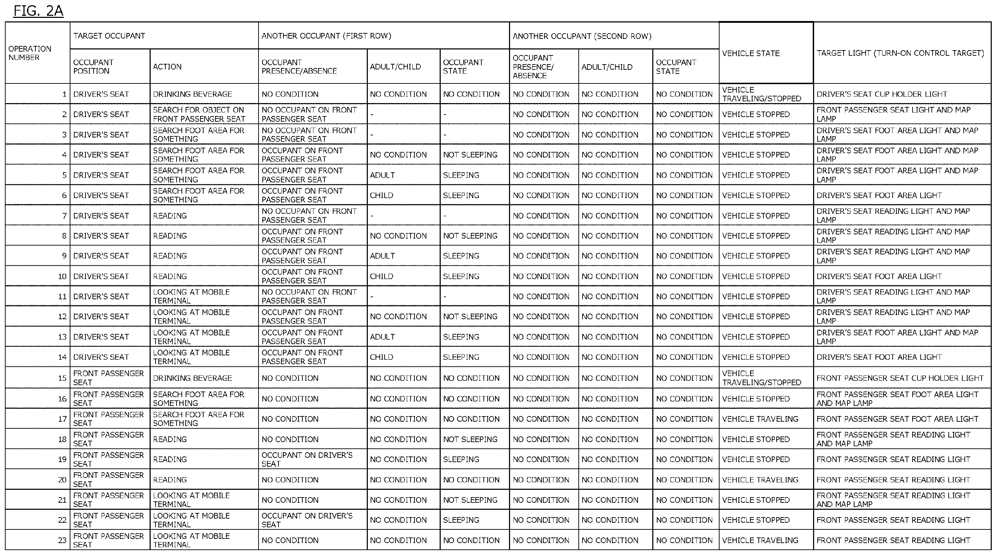

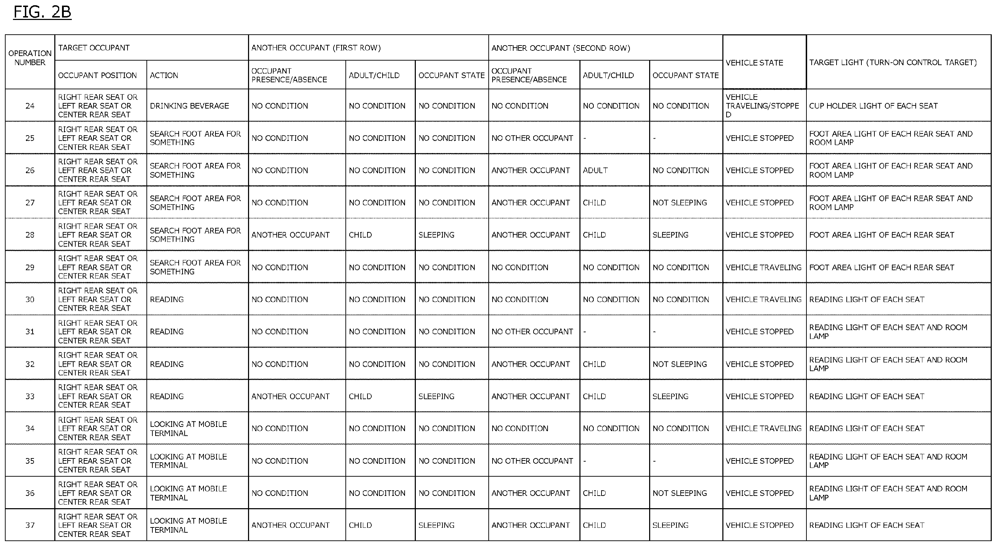

The following describes each configuration included in a lighting control system according to the embodiment with reference to FIG. 1 and FIG. 2. FIG. 1 is a block diagram of each configuration of the lighting control system. The lighting control system includes a camera 1, an onboard device 2, footwell lights 4, reading lights 5, cup holder lights 6, a map lamp 7, a room lamp 8, and a lighting control device 9.

The camera 1 is a camera that is disposed in a vehicle and captures an image of a vehicle interior. The camera 1 is activated along with the power-on of a power switch of the vehicle or an accessory power source, continuously captures images of the vehicle interior, and outputs captured images to the lighting control device 9. Here, the accessory power source means a power source that operates while the power switch is off. The onboard device 2 is, for example, equipment that can control a vehicle state by an operation of an occupant, such as shift positions, the power switch, or a switch for the accessory power source, and a detecting device that indicates a current state of the vehicle, such as a vehicle speed sensor and a torque sensor.

The footwell lights 4, the reading lights 5, the cup holder lights 6, the map lamp 7, and the room lamp 8 are lighting disposed in the vehicle interior. The footwell lights 4, the reading lights 5, and the cup holder lights 6 are each disposed in a driver's seat area, a front passenger seat area, a left rear seat area, a center rear seat area, and a right rear seat area. The footwell light 4 is lighting to illuminate a foot area of an occupant, and is installed below a seat. The reading light is lighting to illuminate a hand area when an occupant is in a state of holding an object he/she uses, such as a book and a mobile terminal (e.g., an electronic device, such as a smartphone and a tablet), in his/her hand. The reading light is installed on a headrest of the seat. The cup holder light 6 is lighting to illuminate a cup holder installed in the vehicle interior. The cup holder has a void portion with an opening in order to hold a cylindrical container, and the cup holder light 6 is configured of a circular LED along an edge of the opening. The map lamp 7 is installed at the center of a ceiling portion of a front seat, and the room lamp 8 is installed at the center of a ceiling portion between the front seat and a rear seat.

The lighting control device 9 identifies actions of occupants from the captured images by the camera, and outputs a control command to switch between turn-on and turn-off states to the lighting, such as the footwell light 4, on the basis of identification results and a vehicle state. The lighting control device 9 has a controller 10. The controller 10 has at least a function of obtaining the captured images, a function of identifying the actions of the occupants, a function of obtaining information of the vehicle state, and a function of controlling the lighting, and includes an image obtaining unit 11, an identification unit 12, a state information obtaining unit 13, and a lighting control unit 14 as function blocks for the respective functions. The controller 10 has a processor and a memory storing programs. The processor executes the programs, and thus, the respective functions are executed. Note that the controller 10 may have functions other than the image obtaining unit 11 and the like.

The image obtaining unit 11 obtains the captured images in which the images of the vehicle interior have been captured from the camera 1. The identification unit 12 identifies an action of at least one occupant among the plurality of occupants on the basis of the captured images. The action of the occupant identified by the identification unit 12 is identified from positions of parts of a body and hands, such as hands, eyes, and a mouth, of the occupant, movements of the parts, a facial expression, a frame of the occupant, and the like. The identification unit 12 performs image processing on the captured images to extract the positions of the parts of the body and hands and/or the movements of the parts. Exemplary actions identified by the identification unit 12 include, for example, an action of searching a foot area (below the seat) for something, an action of holding an object the occupant uses, such as a book and a mobile terminal (e.g., an electronic device, such as a smartphone and a tablet) in his/her hand and using it, an action of drinking a beverage (an action of moving a beverage container to a cup holder, an action when taking out the beverage container from the cup holder, an action of drinking the beverage from the beverage container), and the like by the occupant.

The identification unit 12 may identify an object the occupant uses (an object) from the captured images. For example, when the occupant is drinking a beverage from a beverage container, the identification unit 12 identifies the beverage container as the object the occupant uses. For example, when the occupant reads a book or looks at a mobile terminal, the identification unit 12 identifies the book or the mobile terminal.

The identification unit 12 identifies an attribute of another occupant different from the occupant whose action has been identified and/or a state of the other occupant.

For example, when an occupant on a front passenger seat performs the action of searching a foot area for something, the identification unit 12 identifies the action of the occupant on the front passenger seat, and identifies attributes and states of occupants on a driver's seat and rear seats as occupants other than the occupant on the front passenger seat. The attribute of the occupant is the distinction between an adult and a child, age, gender, and the like. The state of the occupant is a state in which the occupant is sleeping, a state in which the occupant is having a conversation, and the like. Note that the identification unit 12 only needs to identify at least any one of the attribute or the state of the other occupant, and may identify an attribute and a state for each occupant in the case where there are a plurality of the other occupants.

The state information obtaining unit 13 obtains vehicle state information indicative of a vehicle state of the vehicle. The vehicle state is a stopped state, a parked state, a traveling state, an activated state of the vehicle, and the like. The activated state indicates a state in which the stopped state or parked state of the vehicle is switched to traveling. The state information obtaining unit 13 only needs to obtain the vehicle state information from the onboard device 2, such as shift positions, a vehicle speed sensor, a power switch, or a switch for an accessory power source.

The lighting control unit 14 selects a target light as a lighting target on the basis of the identification results by the identification unit 12 and the vehicle state obtained from the state information obtaining unit 13, and turns on the selected target light. The lighting control unit 14 selects the target light corresponding to a seating position of the occupant whose action has been identified by the identification unit 12 and the identified action. For example, when the identification unit 12 identifies the action of "searching the foot area for something" as the action of the occupant on the driver's seat, the lighting control unit 14 selects the footwell light 4 in the driver's seat area and the map lamp 7 in the center area as the target lights from among lights included in the driver's seat area and a plurality of lights included in the center area. In the case of the action of "searching the foot area for something," the lighting control unit 14 at least selects the footwell light 4 that allows illuminating a lower portion of the driver's seat in a focused manner as the target light. The lighting control unit 14 may select the footwell light 4 in a vicinity area of an occupant a part of whose body has moved out of a view angle of the camera 1 as the target light from among the plurality of lights.

In the case of the action of "searching the foot area for something," the lighting control unit 14 may select the map lamp 7 as a lighting target in order to make the lower portion of the driver's seat brighter. The map lamp 7 illuminates not only the driver's seat but also the front passenger seat. For example, when the occupant on the front passenger seat is sleeping, the occupant may wake up due to the turning on of the map lamp 7. As another example, in the case of the action of "searching the foot area for something," the room lamp 8 may be selected as a lighting target in order to make the lower portion of the driver's seat brighter. The room lamp 8 illuminates not only the driver's seat but also the rear seats. For example, when a child (in particular, a baby or infant) is on the rear seat, the turning on of the room lamp 8 may startle the child to cause the child to cry or make noise. The lighting control unit 14 selects the target light on the basis of the attribute of the other occupant different from the occupant whose action has been identified and/or the state of the other occupant.

For example, when the identification unit 12 identifies the action of "searching the foot area for something" as the action of the occupant on the driver's seat, and identifies "adult" as the attribute of the occupant on the front passenger seat and "sleeping" as the state, the lighting control unit 14 excludes the map lamp 7 and the room lamp 8 from the target lights or does not select the map lamp 7 or the room lamp 8 as the target lights. On the other hand, when "adult" is identified as the attribute of the occupant on the front passenger seat, and "not sleeping" is identified as the state, the lighting control unit 14 selects the map lamp 7 and the room lamp 8 as the target lights. As another example, when the identification unit 12 identifies the action of "searching the foot area for something" as the action of the occupant on the driver's seat, and identifies "child" as the attribute of the occupant on the rear seat, the lighting control unit 14 excludes the map lamp 7 and the room lamp 8 from the target lights or does not select the map lamp 7 or the room lamp 8 as the target lights. When the identification unit 12 identifies the action of "searching the foot area for something" as the action of the occupant on the driver's seat, and there is no occupant other than the occupant on the driver's seat, the lighting control unit 14 selects the map lamp 7 and the room lamp 8 as the target lights. This allows turning on the footwell light 4 so as to help the driver to easily search the foot area while maintaining the comfort of the occupant on the front passenger seat or the occupant on the rear seat, for example, even when the state of the occupant on the front passenger seat is "sleeping" or the attribute of the occupant on the rear seat is "child."

The lighting control unit 14 selects the target light corresponding to the vehicle state. The lighting control unit 14 identifies the vehicle state indicated by the vehicle state information. For example, when the vehicle is traveling, the lighting control unit 14 does not select the map lamp 7 or the room lamp 8 as the target light irrespective of the identified action of the occupant. For example, when the vehicle is traveling, the occupant on the front passenger seat performs the action of "searching the foot area for something," and there is no occupant other than the occupant on the driver's seat and the occupant on the front passenger seat, the lighting control unit 14 selects the footwell light 4 in the front passenger seat area as the target light, and does not select the map lamp 7 or the room lamp 8 as the target light. On the other hand, when the vehicle is stopped or parked, the occupant on the front passenger seat performs the action of "searching the foot area for something," and there is no occupant other than the occupant on the driver's seat and the occupant on the front passenger seat, the lighting control unit 14 selects the map lamp 7 and the room lamp 8 as the target lights in addition to the footwell light 4 in the front passenger seat area. That is, the turning on of the map lamp 7 and the room lamp 8 is not appropriate while the vehicle is being driven, and therefore, the lighting control unit 14 excludes them from the target light.

Note that, while in the above-described description, the selection method of the target light by the lighting control unit 14 has been explained for the respective components of the action of the occupant, the attribute/state of the other occupant, and the vehicle state, the lighting control unit 14 may select the target light by combining all the components of the action of the occupant, the attribute/state of the other occupant, and the vehicle state. The lighting control unit 14 may select the target light on the basis of the action of the other occupant different from the occupant whose action has been identified. For example, while the vehicle is stopped or parked, when the occupant on the driver's seat performs the action of "searching the foot area for something," and the occupant on the front passenger seat also performs the action of "searching the foot area for something," the occupants are highly possibly searching a wide range of a floor in the vehicle, not under a specific seat, for something. In such a case, the lighting control unit 14 selects the footwell lights 4 in at least the driver's seat area and the front passenger seat area as the target lights, and also selects the map lamp 7 and the room lamp 8 as the target lights. The lighting control unit 14 selects the footwell light 4 in the area of the rear seats as the target light.

For example, with reference to the tables shown in FIG. 2A and FIG. 2B, the lighting control unit 14 selects the target light on the basis of the action of the occupant, the attribute/state of the other occupant, and the vehicle state. FIG. 2A and FIG. 2B are tables that show the correlations between the target occupant, the other occupants (the first row, the second row), and the vehicle state and the target light. For example, when the identification unit 12 identifies an action of "reading" as the action of the occupant on the front passenger seat, and identifies "sleeping" as the state of the occupant on the driver's seat, and the vehicle state is "stopped," the lighting control unit 14 extracts an operation number "19" from the table shown in FIG. 2A and identifies the target light "the reading light 5 in the front passenger seat area (a front passenger seat reading light)" corresponding to the identification results and the vehicle state, thus selecting the target light. Note that, in FIG. 2A and FIG. 2B, the "target occupant" indicates the occupant whose action has been identified by the identification unit 12, and "no condition" indicates that no attribute or state of the occupant is required.

After selecting the target light, the lighting control unit 14 sets the brightness of the target light corresponding to the brightness in the vehicle interior. The lighting control unit 14 identifies the brightness from the captured images by the camera 1. Note that the lighting control unit 14 may identify the brightness in the vehicle interior from a detected value of an illuminance sensor set in the vehicle. The lighting control unit 14 then sets the brightness of the target light so as to increase the illuminance of the target light as the brightness in the vehicle interior is darker. The lighting control unit 14 sets the illuminance of the target light to brightness that does not affect driving of the driver when the vehicle is traveling. The lighting control unit 14 then outputs a control command to the target light so as to cause the target light to turn on at the set illuminance.

The lighting control unit 14 determines whether a turn-off condition is satisfied or not on the basis of the identification results of the identification unit 12 and/or the vehicle state after the target light is lit on. The turn-off conditions are conditions for turning off the target light. The turn-off conditions include at least one condition among the termination of the identified action, the activation of the vehicle, and the elapse of a predetermined time from the turn-on.

The identification unit 12 identifies the action of the occupant while the target light is on. In the case where the identified action is terminated when the target light is selected, the lighting control unit 14 determines that the turn-off condition is satisfied, and turns off the target light. When the activated state of the vehicle is identified from the vehicle state while the target light is on, the lighting control unit 14 determines that the turn-off condition is satisfied, and turns off the target light. For example, when the shift position is switched from park to drive with the footwell light 4 in the driver's seat area on, or when the vehicle state is switched from a stop to travel based on the vehicle speed of the vehicle, the lighting control unit 14 turns off the footwell light 4 in the driver's seat area to avoid a negative effect on driving of the driver.

For example, assume a situation in which the occupant on the driver's seat performs an action of "looking at a mobile terminal" with no occupant other than the occupant on the driver's seat onboard while the vehicle is stopped. In such a situation, the lighting control unit 14 turns on the reading light 5 in the driver's seat area and the map lamp 7 in the center area (see "OPERATION NUMBER (11)" in FIG. 2A) on the basis of the vehicle state and the action of the occupant on the driver's seat. Assume that, thereafter, the occupant on the driver's seat terminates the action of "looking at the mobile terminal." When the environment is not suitable for the camera 1 to take images, for example, the vehicle interior environment is dark, the identification unit 12 possibly fails to identify or takes time until identifying that the action of "looking at the mobile terminal" has been terminated from the captured images. That is, when the lighting control unit 14 performs processing of turning off the map lamp 7 because a determination that the turn-off condition "the identified action is terminated" is satisfied is made, it takes time until the map lamp 7 is turned off. In this embodiment, by including the activation of the vehicle in the turn-off conditions, the target light, such as the map lamp 7, can be turned off due to the activation of the vehicle even in a situation in which it takes time for the identification unit 12 to identify the action of the occupant. Note that, when the target light is turned off due to the activation of the vehicle, the lighting control unit 14 only needs to turn off lighting that affects driving of the driver among the target lights.

The lighting control unit 14 measures an elapsed time from the time point when the target light is turned on, and turns off the target light when the elapsed time is equal to or more than a predetermined time. The predetermined time is a time period that specifies what is called a timeout, and is set in advance.

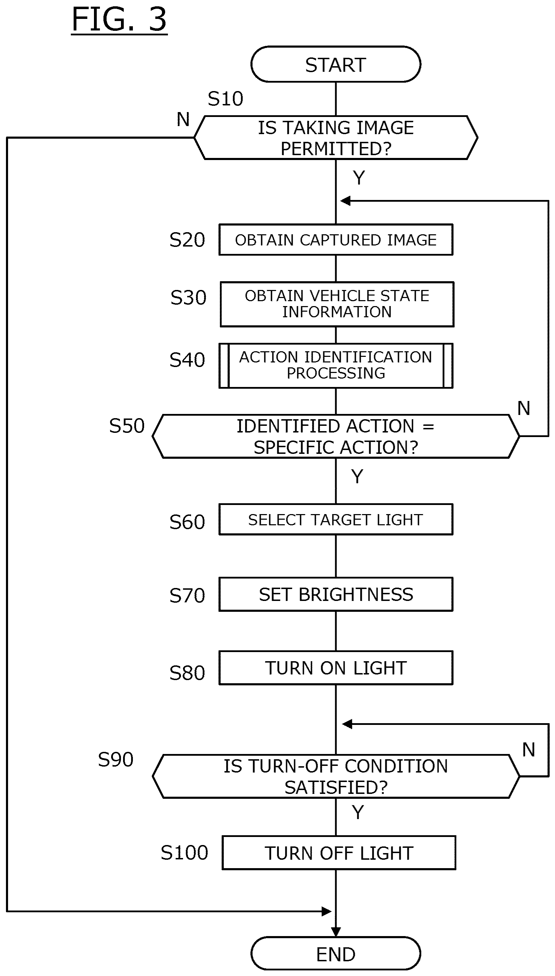

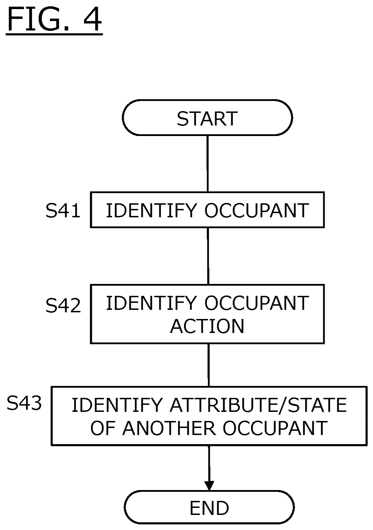

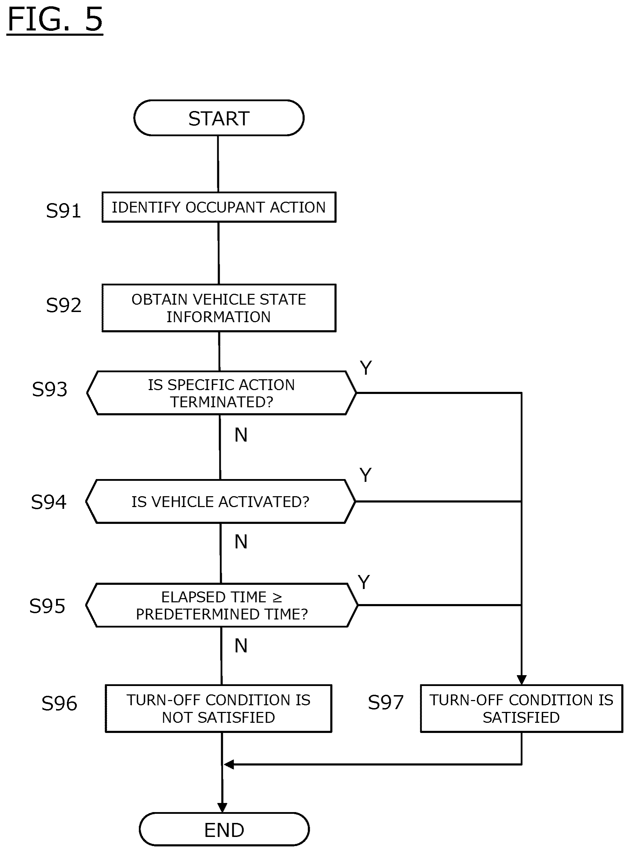

Next, using FIG. 3 to FIG. 5, the control flows of the controller 10 will be described. FIG. 3 is a flowchart showing the control process of the controller 10. FIG. 4 is a sub-flowchart of Step S40 shown in FIG. 3. FIG. 5 is a sub-flowchart of Step S90 shown in FIG. 3. Note that the control flows shown in FIG. 3 to FIG. 5 are executed while the vehicle is stopped or parked.

At Step S10, the controller 10 determines whether taking images is permitted or not. For example, when taking images by the camera 1 is not permitted for protecting privacy, the controller 10 terminates this control flow ("N" at Step S10). On the other hand, when taking images is permitted, the image obtaining unit 11 obtains captured images from the camera 1 at Step S20. At Step S30, the state information obtaining unit 13 obtains vehicle state information indicative of the vehicle state of the vehicle.

At Step S40, the identification unit 12 performs image processing on the captured images to execute action identification processing. The control flow of the action identification processing is shown in the subflow of FIG. 4. At Step S41, the identification unit 12 identifies the occupant. The identification of the occupant is, for example, a seating position of the occupant. At Step S42, the identification unit 12 identifies the action of the occupant. At Step S43, the identification unit 12 identifies the attribute of another occupant different from the occupant whose action has been identified and/or the state of the other occupant. After the subflow processing at Step S41 to Step S43 is terminated, the controller 10 then executes the control flow at Step S50.

At Step S50, the lighting control unit 14 determines whether the identified action matches a specific action specified in the tables shown in FIG. 2A and FIG. 2B or not. The specific actions are associated with lights as targets of lighting control, and the actions shown in the column "TARGET OCCUPANT - ACTION" in FIG. 2A and FIG. 2B correspond to the specific actions. When the identified action does not match the specific action, the controller 10 returns the control flow to Step S20, and executes the control flow at and after Step S20. When the identified action matches the specific action, the lighting control unit 14 selects the target light as the lighting target on the basis of the identification results by the identification unit 12 and the vehicle state at Step S60. Specifically, the lighting control unit 14 refers to the tables shown in FIG. 2A and FIG. 2B to identify the target light corresponding to the specific action matching the identified action, the attribute of the other occupant and/or the state of the other occupant, and the vehicle information, thereby selecting the target light.

At Step S70, the lighting control unit 14 sets the brightness of the target light corresponding to the brightness in the vehicle interior. At Step S80, the lighting control unit 14 turns on the selected target light at the set brightness. At Step S90, the lighting control unit 14 determines whether the turn-off condition is satisfied or not on the basis of the identification results of the identification unit 12 and/or the vehicle state while the target light is lit on.

The control flow of determination processing whether the turn-off condition is satisfied or not is shown in the subflow of FIG. 5. At Step S91, the image obtaining unit 11 obtains the captured images, and the identification unit 12 identifies an occupant action on the basis of the captured images. At Step S92, the state information obtaining unit 13 obtains the vehicle state information. At Step S93, the lighting control unit 14 determines whether the specific action has been terminated or not on the basis of the action identified in the control processing at Step S91. The specific action is a specific action in the determination processing at Step S50, and corresponds to the action identified when the target light is selected. When a determination that the specific action has been terminated is made, the lighting control unit 14 determines that the turn-off condition is satisfied (Step S97).

When a determination that the specific action has not been terminated is made, at Step S94, the lighting control unit 14 determines whether the vehicle is activated or not on the basis of the vehicle state indicated by the vehicle state information obtained in the control processing at Step S92. When the vehicle is activated, the lighting control unit 14 determines that the turn-off condition is satisfied (Step S97).

When a determination that the vehicle is not activated is made, the lighting control unit 14 determines whether the elapsed time from the time point when the target light is turned on is equal to or more than a predetermined time at Step S95. When a determination that the elapsed time is less than the predetermined time is made ("N" at Step S95), the lighting control unit 14 determines that the turn-off condition is not satisfied (Step S96). When a determination that the elapsed time is equal to or more than the predetermined time is made, the lighting control unit 14 determines that the turn-off condition is satisfied (Step S97).

As shown in FIG. 3, when the determination that the turn-off condition is not satisfied is made from the control flow at Step S90 and Step S91 to Step S97, the controller 10 repeatedly executes the control flow at Step S90. When the determination that the turn-off condition is satisfied is made, the lighting control unit 14 turns off the target light at Step S100. The controller 10 then terminates the control flow.

As described above, the lighting control device and the lighting control method according to the embodiment obtain captured images from the camera 1, identify an action of at least one occupant among a plurality of occupants and an attribute of another occupant different from the one occupant among the plurality of occupants and/or a state of the other occupant on the basis of the captured images, obtain vehicle state information indicative of a vehicle state of a vehicle, select a target light as a lighting target on the basis of identification results and the vehicle state, and turn on the selected target light. This allows controlling lighting while maintaining the comfort of the other occupant in addition to the occupant who has performed the specific action.

In this embodiment, the lighting control unit 14 sets the brightness of the target light corresponding to the brightness in the vehicle interior. This allows an adjustment of the brightness of the target light to an appropriate illuminance corresponding to the brightness in the vehicle interior.

In this embodiment, the lighting control unit 14 determines whether the turn-off condition is satisfied on the basis of the identification results of the identification unit 12 and/or the vehicle state, and turns off the target light when the turn-off condition is satisfied. This allows turning off the target light at an appropriate timing.

In this embodiment, the lighting control unit 14 turns off the target light when the vehicle is activated while the target light is on. This allows avoiding a negative effect on driving of the driver due to the turning on of the target light.

In this embodiment, the image obtaining unit 11 obtains the captured images when capturing image of the vehicle interior is permitted. This allows achieving privacy protection.

In this embodiment, the lighting control unit 14 turns off the target light when the elapsed time from the time point when the target light is turned on is equal to or more than the predetermined time. As a result, the target light can be turned off due to a timeout.

Note that, as a modification of the embodiment, the lighting control unit 14 of the controller 10 turns on the target light when the vehicle is controlled by autonomous driving control while the vehicle is traveling, and inhibits the turning on of the target light when the vehicle is controlled by manual driving control. In particular, when the lighting in the driver's seat area is included in the target lights, the lighting control unit 14 may control the turning on and turning off of the target light as in the modification. This allows increasing the comfort of the occupant on the driver's seat during autonomous driving and avoiding a negative effect on driving of the driver due to the turning on of the target light during manual driving.

Note that, while an example of the execution while the vehicle is stopped or parked has been described in the control flow shown in FIG. 3 to FIG. 5, the controller 10 only needs to execute the control flow shown in FIG. 3 to FIG. 5 while the vehicle is traveling, omitting the control flow at Step S94.

Note that, in this embodiment, it is not necessary to execute all the flows of the control flow shown in FIG. 3 to FIG. 5, and a part of the flows may be omitted, or the sequence of the flows may be changed.

### Second Embodiment

Next, a lighting control system according to a second embodiment will be described. In the interior component control system according to the second embodiment, a part of controlling functions is added to the identification unit 12 and the lighting control unit 14 with respect to the interior component control system according to the first embodiment described above. Except for the added functions of the identification unit 12 and the lighting control unit 14, since the second embodiment has the same configuration as that of the first embodiment, the description described above is cited for the same configuration as that of the first embodiment.

The camera 1 is installed at such a position that a view angle includes seats. Therefore, the camera 1 is installed at such a position that the view angle of the camera 1 includes a part of the body of the occupant when the occupant sits on a seat. For example, the view angle of the camera 1 includes at least the upper body of the occupant and does not include a foot area of the occupant in a state in which the occupant sits on the seat. Note that, in order to capture images of an occupant on a rear seat, the camera 1 only needs to be installed on a roof (a ceiling in the vehicle interior). Alternatively, the camera 1 may be a wide-angle camera so as to capture rear seat surfaces.

The identification unit 12 identifies the trajectory of the body when a part of the body of the occupant moves out of the view angle of the camera 1. One example is, for example, a situation in which the occupant bends down from a state of sitting on the seat to pick up an object at a foot area (hereinafter also referred to as a "situation of picking up an object"). In this situation, when the occupant bends down from the sitting state, the upper body of the occupant moves downward with respect to the seat. The identification unit 12 obtains captured images in chronological order to extract the movement of the part (the upper body) of the occupant from a plurality of the captured images, thereby identifying the trajectory of the upper body of the occupant. For example, when the center of the view angle of the camera 1 is the center of the upper body of the occupant, the trajectory of the upper body makes a line along a downward direction from a center point of the view angle when the situation is picking up an object. Thus, the identification unit 12 identifies the action of the occupant when a part of the body of the occupant moves out of the view angle of the camera 1.

The lighting control unit 14 outputs a control command to the footwell light 4 corresponding to the trajectory of the body identified by the identification unit 12. First, the lighting control unit 14 identifies the direction in which the trajectory of the body moves out of the view angle (hereinafter also referred to as a "direction out of the view angle"). The lighting control unit 14 then outputs a control command to turn on the light to the footwell light 4 positioned in the direction out of the view angle. A footwell light 4 as a transmission destination of the control command is installed outside of the view angle of the camera 1 and in a region in the direction out of the view angle. The lighting control unit 14 identifies a lower portion of the seat as the direction out of the view angle when the situation is picking up an object. The lighting control unit 14 outputs the control command to turn on the footwell light to the footwell light installed in a foot area of the bending occupant. That is, the lighting control unit 14 identifies the footwell light 4 installed outside of the view angle of the camera 1 and in the region in the direction out of the view angle as the device of the transmission destination of the control command from the trajectory of the body. Thus, the foot area is illuminated when the occupant bends down to pick up an object.

As an example other than the situation of picking up an object, assume that the driver reaches out to take an object inside a roof pocket while the vehicle is stopped. The hand of the driver moves from the position of a steering wheel toward the roof pocket. The identification unit 12 identifies the trajectory of the hand by extracting the movement of the hand. The lighting control unit 14 identifies the direction from the position of the steering wheel toward the roof pocket as the direction out of the view angle. The direction out of the view angle is a direction in which the trajectory of the hand moves out of the view angle. The lighting control unit 14 outputs the control command to turn on the light to a light (the room lamp 8) installed in a view angle direction. Thus, the light installed in the proximity of the roof pocket is turned on before the hand touches the roof pocket when the driver tries to take an object inside the roof pocket.

The identification unit 12 identifies that a part of the body of the occupant returns to the view angle after the part of the body of the occupant moves out of the view angle of the camera 1. For example, after the situation of picking up an object, the occupant returns his/her upper body to the original position, and the occupant has a posture of sitting on the seat. At this time, the upper body once moves out of the view angle to pick up an object, and the upper body returns to the view angle. The identification unit 12 identifies that the upper body returns to the view angle. That is, the identification unit 12 identifies that the upper body moves out of the view angle and then returns to the view angle from a sequence of the upper body movements.

The lighting control unit 14 outputs an off command to turn off the light to the footwell light 4 when identifying that the part of the body of the occupant returns to the view angle. When the occupant picks up an object in the foot area, and then returns his/her posture to the original sitting state, the lighting control unit 14 outputs an off command to turn off the lighting of the footwell light 4 when identifying that the upper body returns to the view angle. Note that the lighting control unit 14 may output the off command to the footwell light 4 after the elapse of a predetermined time from the time point when the upper body returning to the view angle is identified. This allows switching on and off of the lighting of the footwell light 4 corresponding to the action of the occupant.

Note that the lighting control unit 14 may output the off command to the notification device when the predetermined time elapses from the time point when the part of the body of the occupant moving out of the view angle of the camera 1 is identified. This allows turning off the lighting of the footwell light 4 even when the part of the body of the occupant returning to the view angle is not identifiable from the captured images.

As described above, the lighting control device or the lighting control method according to the embodiment identify the trajectory of a body when a part of the body of the occupant moves out of the view angle of the camera 1, and outputs a control command to the footwell light 4 and/or the room lamp 8 corresponding to the identified trajectory of the body. This allows identifying that the action of the occupant is a specific action to the footwell light 4 and/or the room lamp 8 even when the footwell light 4 and/or the room lamp 8 is installed outside of the view angle of the camera 1. Note that, while in the above-described embodiment, the lighting control unit 14 outputs the control command to the footwell light 4 and the room lamp 8, not limited to the footwell light 4 and the room lamp 8, the lighting control unit 14 may output the control command to switch on and off the lighting to the reading light 5, the cup holder light 6, and the map lamp 7 as well. That is, the lighting control unit 14 may output the control command of the lighting to at least one device among the reading light 5, the cup holder light 6, and the map lamp 7 corresponding to the trajectory of the body identified by the identification unit 12.

### Description of Reference Numerals

- 1: Camera
- 2: Onboard device
- 4: Footwell light
- 5: Reading light
- 6: Cup holder light
- 7: Map lamp
- 8: Room lamp
- 9: Lighting control device
- 10: Controller
- 11: Image obtaining unit
- 12: Identification unit
- 13: State information obtaining unit
- 14: Lighting control unit

## Claims

1. A lighting control device that controls lighting disposed in a vehicle interior, the lighting control device comprising:
an image obtaining unit that obtains a captured image from a camera that captures an image of the vehicle interior;
an identification unit that identifies an action of at least one occupant among a plurality of occupants and an attribute of another occupant different from the one occupant among the plurality of occupants and/or a state of the other occupant based on the captured image;
a state information obtaining unit that obtains vehicle state information indicative of a vehicle state of a vehicle; and
a lighting control unit that selects a target light as a lighting target of the lighting based on identification results by the identification unit and the vehicle state, and turns on the selected target light.

2. The lighting control device according to claim 1, wherein
the lighting control unit sets brightness of the target light corresponding to brightness in the vehicle interior.

3. The lighting control device according to claim 1 or 2, wherein
the lighting control unit:
determines whether a turn-off condition is satisfied based on the identification results and/or the vehicle state; and
turns off the target light when the turn-off condition is satisfied.

4. The lighting control device according to any one of claims 1 to 3, wherein
the lighting control unit turns off the target light when the vehicle is activated while the target light is on.

5. The lighting control device according to any one of claims 1 to 4, wherein
the image obtaining unit obtains the captured image when taking an image of the vehicle interior is permitted.

6. The lighting control device according to any one of claims 1 to 5, wherein
the lighting control unit turns off the target light when an elapsed time from a time point when the target light is turned on is equal to or more than a predetermined time.

7. The lighting control device according to any one of claims 1 to 6, wherein
the lighting control unit:
turns on the target light when the vehicle is controlled by autonomous driving control; and
inhibits turning on of the target light when the vehicle is controlled by manual driving control.

8. A lighting control method that controls lighting disposed in a vehicle interior, the lighting control method comprising, by a controller:
obtaining a captured image from a camera that captures an image of the vehicle interior;
identifying an action of at least one occupant among a plurality of occupants and an attribute of another occupant different from the one occupant among the plurality of occupants and/or a state of the other occupant based on the captured image;
obtaining vehicle state information indicative of a vehicle state of a vehicle; and
selecting a target light as a lighting target of the lighting based on identification results and the vehicle state, and turning on the selected target light.
